(19) Europäisches Patentamt
European Patent Office
Office européen des brevets

(11) **EP 4 005 726 A1**

(12) **EUROPÄISCHE PATENTANMELDUNG**

(43) Veröffentlichungstag:
**01.06.2022 Patentblatt 2022/22**

(21) Anmeldenummer: **20209769.7**

(22) Anmeldetag: **25.11.2020**

(51) Internationale Patentklassifikation (IPC):
***B23K 31/12*** (2006.01)     ***B23K 9/095*** (2006.01)

(52) Gemeinsame Patentklassifikation (CPC):
**B23K 31/125; B23K 9/0953**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **FRONIUS INTERNATIONAL GmbH 4643 Pettenbach (AT)**

(72) Erfinder:
- **Roithinger, Philipp**
  **4600 Wels-Thalheim (AT)**
- **Ennsbrunner, Helmut**
  **4600 Wels-Thalheim (AT)**
- **Söllinger, Dominik**
  **4600 Wels-Thalheim (AT)**
- **Wallinger, Gebhard**
  **4600 Wels-Thalheim (AT)**

(74) Vertreter: **Patentanwälte Pinter & Weiss OG Prinz-Eugen-Straße 70 1040 Wien (AT)**

(54) **VERFAHREN ZUR BESTIMMUNG EINES SCHÄTZWERTES EINER LICHTBOGENSPANNUNG**

(57)     Um die Schätzung der Lichtbogenspannung, zur Verwendung in einem Schweißprozess, zu verbessern, wird vorgeschlagen, die Schweißleitung (4) für die Schätzung der Lichtbogenspannung ($\hat{u}_{LB}$) mit einem Schweißleitungsmodell (13) als Übertragungssystem mit Ordnung größer eins zu modellieren.

Fig. 3

**Beschreibung**

Die gegenständliche Erfindung betrifft ein Verfahren zur Bestimmung eines Schätzwertes einer Lichtbogenspannung eines zwischen einer Schweißelektrode und einem Werkstück brennenden Lichtbogens, wobei mit einem Schweißleitungsmodell mit Modellparametern ein Leitungsspannungsabfall einer Schweißleitung zwischen einer Messstelle an der Schweißleitung und dem Lichtbogen ermittelt wird und das Schweißleitungsmodell die Schweißleitung als Übertragungssystem mit einem über die Schweißleitung fließenden Schweißstrom oder einer an der Messstelle anliegenden Messspannung als Eingangsgröße und dem Leitungsspannungsabfall als Ausgangsgröße modelliert, um zu einem aktuellen Schweißstrom oder einer aktuellen Messspannung einen aktuellen Schätzwert für den Leitungsspannungsabfall zu ermitteln, und mit einem bekannten Zusammenhang zwischen Leitungsspannungsabfall und Lichtbogenspannung der Schätzwert der Lichtbogenspannung ermittelt wird. Die Erfindung betrifft auch eine Schweißstromquelle, in der ein solcher Schweißleitungsmodell implementiert ist.

Die Hauptaufgabe einer Schweißstromquelle zur Durchführung eines Schweißprozesses besteht darin, die Prozessgrößen Schweißstrom und/oder Schweißspannung und gegebenenfalls auch Schweißdrahtvorschub in Abhängigkeit von der Schweißaufgabe derart zu erzeugen, steuern und zu regeln, dass schlussendlich ein gutes Schweißergebnis mit erwünschter Schweißnahtqualität, und damit eine gute Schweißverbindung, erzeugt wird. Der Regelung des Schweißstromes kommt dabei eine besondere Rolle zu, weil durch diesen die Leistung für den Schweißprozess zur Verfügung gestellt wird. Für die Regelung des Schweißprozesses wird auch die Lichtbogenspannung benötigt, weil diese ein für den Schweißprozess wichtiger Parameter ist. Die am Lichtbogen abfallende Lichtbogenspannung steht in Bezug zur Lichtbogenlänge und somit auch zum Abstand zwischen Schweißelektrode und Werkstück (bzw. Schmelzbad). Die Lichtbogenspannung ist aber in der Praxis nicht direkt messbar, weshalb man auf eine Rekonstruktion der Lichtbogenspannung aus einer indirekten Messung angewiesen ist.

Die Schweißleitung, bestehend aus Schweißstromleitung (die von der Schweißstromquelle zum Schweißbrenner bzw. zur Schweißelektrode hinführende Leitung) und Masseleitung (die vom Werkstück zur Schweißstromquelle zurückführende Leitung), verbindet die Schweißstromquelle mit dem Schweißbrenner, also mit der Schweißelektrode, und dem Werkstück. Die Schweißleitung wird in der Regel in Anschlussbuchsen an der Schweißstromquelle angeschlossen. Die Buchsenspannung zwischen den Anschlussbuchsen, also zwischen Schweißstromleitung und Masseleitung, sowie der über die Schweißleitung fließende Buchsenstrom, kann an der Schweißstromquelle einfach gemessen werden. Der Buchsenstrom kann mit dem Schweißstrom gleichgesetzt werden, da beim Schweißen zumeist Stromflüsse parallel zum Lichtbogen vernachlässigt werden können. Aufgrund des Spannungsabfalls über die Schweißleitung entspricht die Buchsenspannung aber nicht der Lichtbogenspannung. Für die Rekonstruktion der Lichtbogenspannung aus der Buchsenspannung, wird im bekannten Stand der Technik ein Leitungsmodell verwendet, das die Schweißleitung als Serienschaltung eines Leitungswiderstandes und einer Leitungsinduktivität modelliert (R/L-Modell), um den Spannungsabfall an der Schweißleitung zu ermitteln. Mit der gemessenen Buchsenspannung und dem gemessenen Buchsenstrom und dem Leitungsmodell kann dann ein Schätzwert für die Lichtbogenspannung ermittelt werden. Mit dem Leitungsmodell wird somit der Spannungsabfall an der Schweißleitung kompensiert, um einen Schätzwert der Lichtbogenspannungen zu erhalten. Das ist beispielsweise aus der WO 2000/74888 A1 oder der DE 10 2005 005 771 B4 bekannt. Da in diesem Modell das Schlauchpaket mit nur einem Energiespeicher bzw. dynamische Bauteil beschrieben wird (der Leitungsinduktivität L) besitzt dieses Modell die Ordnung eins.

Die Parameter des R/L-Leitungsmodells, also Leitungswiderstandes und Leitungsinduktivität, sind entweder bekannt, oder werden identifiziert. Die Parameteridentifikation kann während des Schweißens oder auch in einer Schweißpause erfolgen. Beispielsweise kann die Schweißelektrode (oder das Kontaktrohr des Schweißbrenners) mit dem Werkstück kurzgeschlossen werden. Die Ermittlung des Leitungswiderstandes erfolgt dann bei konstantem Strom. Danach kann ein Stromimpuls aufgeschaltet werden und daraus die Leitungsinduktivität ermittelt werden. Während des Schweißens kann beispielsweise ein Stromimpuls, der den Schweißprozess nicht stört, auf den Schweißstrom aufmoduliert werden und aus der Reaktion die Modellparameter ermittelt werden. Die Modellparameter können auch aus einem formelmäßigen Zusammenhang aus vorhandenen Messwerten laufend ermittelt werden, wie beispielsweise in der DE 10 2005 005 771 B4.

Damit kann im Betrieb der Schweißstromquelle die Lichtbogenspannung geschätzt werden. Es hat sich in der Praxis jedoch erwiesen, dass mit dem üblichen R/L-Leitungsmodell erhebliche Schätzfehler bei der Rekonstruktion der Lichtbogenspannung auftreten können, was den Schweißprozess negativ beeinflussen kann.

Durch Untersuchungen der Anmelderin wurde erkannt, dass die Verlegung der Schweißleitung einen großen Einfluss auf die Rekonstruktion der Lichtbogenspannung hat. Es wurde beobachtet, dass die Schweißleitung oftmals in der Nähe von elektrisch leitfähigen Bauteilen/Komponenten/Konstruktionen verlegt wird. Das kann ein Roboterarm eines Schweißroboters sein, oder eine Stahlbaukonstruktion auf einer Baustelle oder in einer Werkstatt, oder ein metallischer Bauteil (wie z.B. im Schiffsbau), oder die Stahlarmierung in einem Stahlbetonteil, oder auch ein metallischer Kabelkanal, oder ähnliches. Aufgrund der über die Schweißleitung fließenden hochdynamischen Schweißströme (sich zeitlich ändernde elektrische Ströme mit steilen Flanken und hohen Frequenzen), kann es zu einer elektromagnetischen Wechselwirkung mit solchen Bauteilen kommen. Die sich zeitlich ändernden Schweißströme bewirken sich zeitlich ändernde magnetische Felder im Umfeld der Schweißleitung. Bekanntermaßen wird in einem elektrisch leitfähigen Körper, welcher sich in einem sich ändernden magnetischen Feld befindet, eine elektrische Feldstärke induziert, welche aufgrund der Leitfähigkeit unmittelbar in die Erzeugung von elektrischen Stromdichten im Körper mündet. Die Stromdichten sind so ausgeprägt, dass deren magnetische Felder wiederum gegen das ursprüngliche Feld gerichtet sind, was in weiterer Folge zu einer Wechselwirkung der stromführenden Komponenten führt. Der sich zeitlich ändernde Schweißstrom in der Schweißleitung verursacht derartige Phänomene in angrenzenden, elektrisch leitfähigen Materialien. Ein herkömmliches R/L-Leitungsmodell kann derartige Kopplungen nicht beschreiben und liefert in derartigen Fällen somit keine ausreichende genaue Rekonsturktion der Lichtbogenspannung.

Dieser Effekt tritt besonders stark bei ferromagnetischen Materialien, wie z.B. Eisen oder Stahl, auf, da die magnetische Flussdichte in solchen Materialien stark ausgeprägt sein kann. Aber auch bei paramagnetischen Materialien, wie z.B. Aluminium, kann dieser Effekt beobachtet werden, allerdings schwächer als bei ferromagnetischen Materialien.

Da Schweißleitungen in der praktischen Anwendung immer in der Nähe solcher, elektrisch leitfähigen Materialien verlegt werden müssen - weil diese ja auch geschweißt werden müssen - hat dieser Effekt praktisch immer einen Einfluss auf die Durchführung des Schweißprozesses. Dieser Effekt kann durch das derzeit verwendete R/L-Leitungsmodell aus einem in Serie geschalteten Leitungswiderstand und einer Leitungsinduktivität nicht erfasst werden, wodurch die Rekonstruktion der Lichtbogenspannung ungenau werden kann, was wiederum die erzielbare Schweißqualität nachteilig beeinflussen kann.

Die Lichtbogenspannung ist nicht nur zur Regelung des Schweißprozesses eine wichtige Größe, sondern wird auch zur Ermittlung wichtiger bekannter Kennwerte des Schweißprozesses benötigt, beispielsweise der Wärmeeintrag in das zu schweißende Werkstück oder die Streckenenergie (auch Lichtbogenenergie genannt). Auch hierfür werden möglichst genaue Schätzungen der Lichtbogenspannung benötigt.

Es ist eine Aufgabe der gegenständlichen Erfindung die Schätzung der Lichtbogenspannung, zur Verwendung in einem Schweißprozess, zu verbessern.

Diese Aufgabe wird dadurch gelöst, dass die Schweißleitung zur Schätzung der Lichtbogenspannung mit einem Schweißleitungsmodell als Übertragungssystem mit Ordnung größer eins modelliert wird. Es wurde erkannt, dass mit einem Schweißleitungsmodel mit einer Ordnung größer eins bei der Schätzung des Leitungsspannungsabfalls auch die magnetische Kopplung der Schweißleitung mit leitfähigen Bauteilen im Umfeld der Schweißleitung berücksichtigt werden kann. Damit nimmt die Schätzung der Lichtbogenspannung auch auf die Verlegung der Schweißleitung Rücksicht und die Schätzung der Lichtbogenspannung kann genauer als bisher erfolgen. Die geschätzte Lichtbogenspannung kann für die Regelung des Schweißprozesses, beispielsweise die Regelung eines Schweißstromes oder einer Drahtvorschubgeschwindigkeit eines Schweißdrahtes, verwendet werden. Aufgrund der genaueren Schätzung der Lichtbogenspannung kann auch die erzielbare Qualität der Schweißnaht verbessert werden, weil der Regelung eine genauere Schätzung der Lichtbogenspannung zur Verfügung gestellt werden kann. Die Schätzung der Lichtbogenspannung kann aber auch für die Ermittlung von Kennwerten des Schweißprozesses, wie eine Streckenenergie, ein Widerstandswert, ein Leistungswert oder ein Wärmeeintrag, verwendet werden. Auch solche Kennwerte können durch die genauere Schätzung der Lichtbogenspannung genauer ermittelt werden.

Wenn die Modellparameter des Schweißleitungsmodells nicht bekannt sind, dann können diese mittels eines Parameterschätzverfahrens identifiziert werden.

Parameterschätzverfahren sind vielfältig bekannt und einfach anwendbar, sodass die Modellparameter einfach bestimmt werden können.

Die Identfikation der Modellparameter kann auch während einer Kurzschlussphase während des Schweißens erfolgen, was es ermöglicht, bei bestimmten Schweißverfahren laufend die Modellparameter neu zu bestimmten. Damit kann auf sich ändernde Gegebenheiten in der Verlegung der Schweißleitung reagiert werden. Die Modellparameter können aber auch für einen vorgegebenen zeitlichen Verlauf der Eingangsgröße und zugehörigen Ausgangsgrößen vor dem Schweißen identifiziert werden. Das ermöglicht es, einen für die Parameteridentifikation günstigen Verlauf der Eingangsgrößen zu wählen, was die Parameteridentifikation verbessern kann.

Dabei hat es sich als besonders vorteilhaft herausgestellt, wenn ein zeitlicher Verlauf der Eingangsgröße verwendet wird, der eine Mehrzahl von ansteigenden Flanken aufweist, wobei die Steigung von zumindest zwei Flanken variiert, und dabei die Ausgangsgröße gemessen wird. Damit kann das Übertragungssystem in Form der Schweißleitung gut angeregt werden, um gute Messwerte und Schätzungen der Ausgangsgröße für die Parameterschätzung zu erhalten.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt

Fig.1 eine Schweißstromquelle zur Regelung eines Schweißprozesses,
Fig.2 eine Verlegung der Schweißleitung in der Nähe eines leitfähigen Bauteils,
Fig.3 ein Schweißleitungsmodell mit einer Ordnung größer eins,

Fig.4 den zeitlichen Verlauf des Schweißstromes als Anregung zur Parameteridentifikation der Modellparameter des Schweißleitungsmodellsund

Fig.5 den zeitlichen Verlauf der Lichtbogenspannung bei einem bestimmten Schweißstrom mit einem erfindungsgemäßen Leitungsmodell mit Ordnung größer als eins und mit einem herkömmlichen R/L-Leitungsmodell.

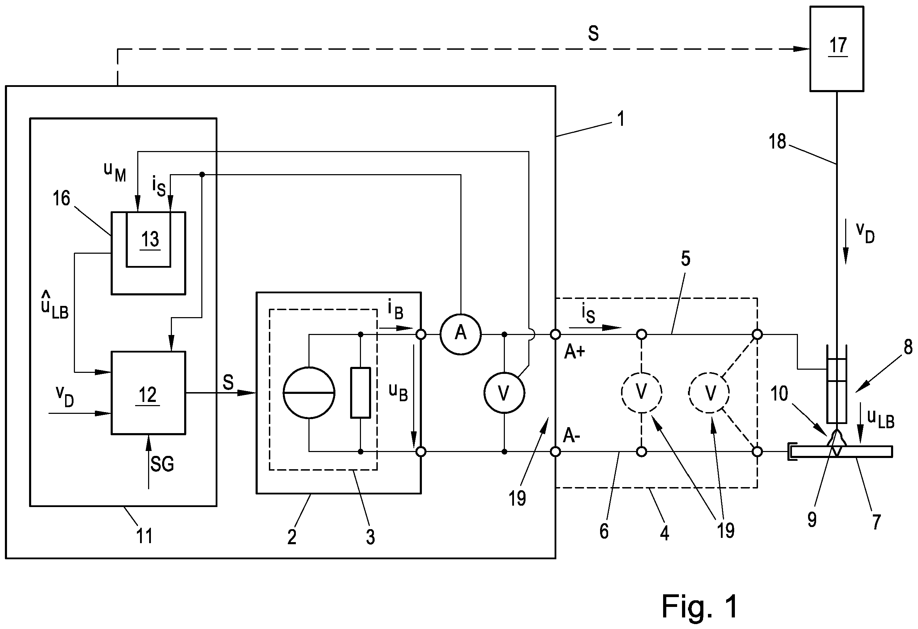

Mit Fig.1 wird eine Schweißstromquelle 1 zur Durchführung eines Schweißprozesses beschrieben. Die Schweißstromquelle 1 umfasst ein Leistungsteil 2 zur Erzeugung des Schweißstromes. Das Leistungsteil 2 ist als Stromquelle 3 dargestellt, die an den Anschlussbuchsen A+, A- der Schweißstromquelle 1 zur Durchführung des gewünschtren Schweißprozesses eine Buchsenspannung $u_B$ und einen Buchsenstrom $i_B$ zur Verfügung stellt. Das Leistungsteil 2 ist eine elektrische Schaltung, die eine Eingangsspannung, beispielsweise aus einem Wechselstromnetz (auch mehrphasig) oder auch aus einer Gleichspannung (beispielsweise aus einer Batterie), in einen zeitlichen Stromverlauf (der Schweißstrom) umsetzt, beispielsweise ein Spannungswandler wie ein AC/DC-Wandler oder DC/DC-Wandler. Der Stromverlauf hängt vom Schweißverfahren ab und wird von einer Schweißregelungseinheit 11 geregelt. Die Schweißregelungseinheit 11 kann in der Schweißstromquelle 1 integriert sein, kann aber auch getrennt vom Leistungsteil 2 oder der Schweißstromquelle 1 ausgeführt sein. Der angestrebte Stromverlauf dient der Schweißregelungseinheit 11 als Sollgröße SG, um das Leistungsteil 2 zur Realisierung des Schweißprozesses anzusteuern. Analog dazu könnte natürlich auch ein Spannungsverlauf als Sollgröße SG vorgegeben sein. An die Anschlussbuchsen A+, A- der Schweißstromquelle 1 wird eine Schweißleitung 4 angeschlossen, umfassend eine Schweißstromleitung 5 und eine Masseleitung 6. Üblicherweise, aber nicht notwendigerweise, wird die Masseleitung 6 separat zum Werkstück 7 geführt und mit dem zu schweißenden Werkstück 7 verbunden.

Die Schweißstromleitung 5 wird üblicherweise in einem Schlauchpaket zu einem Schweißbrenner 8 mit einer Schweißelektrode 9 (abschmelzend oder nicht abschmelzend) geführt. Im Schlauchpaket können bekanntermaßen auch noch weitere Leitungen integriert sein, wie beispielsweise eine Kühlmediumleitung, eine Schutzgasleitung, eine Leitung für eine abschmelzende Schweißelektrode, eine Steuerleitung etc. Auch die Masseleitung 6 kann im Schlauchpaket geführt sein.

Der Schweißbrenner 8 kann an einem Schweißroboter (nicht dargestellt) angeordnet sein, oder kann von Hand geführt sein. Der Schweißbrenner 8 kann ein Kontaktrohr aufweisen, das an die Schweißstromleitung 5 angeschlossen ist und das vom Schweißdraht 18, der dabei gleichzeitig als Schweißelektrode 9 fungiert, kontaktiert wird (angedeutet in Fig.1), wie beispielsweise beim Metall-Inertgasschweißens (MIG) oder Metall-Aktivgasschweißen (MAG). Im Schweißbrenner 8 kann aber auch eine nicht abschmelzende Schweißelektrode 9 angeordnet sein, die mit der Schweißstromleitung 5 verbunden ist, wie beispielsweise beim Wolfram-Inertgas-Schweißen (WIG). Der Zusatzwerkstoff wird über einen Schweißdraht 18 zugeführt. Der Schweißdraht 18 kann mit einer Schweißdrahtvorschubeinheit 17 zur Schweißstelle zugeführt werden.

Beim Schweißen brennt zwischen Schweißelektrode 9 und dem Werkstück 7 ein Lichtbogen 10. Am Lichtbogen 10 fällt die Lichtbogenspannung $u_{LB}$ ab. Die Ausführung des Schweißbrenners 8 und das Schweißverfahren ist für die Erfindung jedoch unerheblich. Für die Steuerung des Schweißprozesses ist die Kenntnis des Schweißstromes (der mit hinreichender Genauigkeit mit dem Buchsenstrom $i_B$ gleichgesetzt werden kann), also des über den Lichtbogen 10 fließenden Stromes, und der Lichtbogenspannung $u_{LB}$, also der am Lichtbogen 10 abfallenden Spannung, wichtig. Während der Buchsenstrom $i_B$ mit entsprechender Messtechnik in der Schweißstromquelle 1 einfach gemessen werden kann, ist die Lichtbogenspannung $u_{LB}$ einer direkten Messung nicht zugänglich.

Der Leistungsteil 2 der Schweißstromquelle 1 wird zur Regelung des Schweißprozesses von einer Schweißregelungseinheit 11 geregelt, die eine Stellgröße S für das Leistungsteil 2 erzeugt, beispielsweise ein Tastverhältnis einer PWM (Pulsweitenmodulation) Steuerung eines Stromrichters, um den gewünschten Schweißstrom und/oder die gewünschte Schweißspannung zu erzeugen. Dazu kann in der Schweißregelungseinheit 11 eine Schweißprozessregelungseinheit 12 vorgesehen sein, die den vorgesehenen Schweißprozess ausführt, überwacht und steuert. Der Schweißprozessregelungseinheit 12 werden dazu Sollgrößen SG der Regelung, beispielsweise ein zeitlicher Sollverlauf des Schweißstromes oder einer Schweißspannung, vorgegeben. Eine Sollgröße SG kann beispielsweise durch Einstellungen des Schweißprozesses, beispielsweise durch Auswahl eines Schweißprogramms oder durch das Einstellen von Schweißparametern an einer I/O-Schnittstelle der Schweißstromquelle 1, vorgegeben werden. Die Schweißregelungseinheit 11 und/oder die Schweißprozessregelungseinheit 12 können dazu auch Eingangsgrößen aus dem Schweißprozess, als Istgrößen der Regelung, erhalten, wie beispielsweise eine Lichtbogenspannung $u_{LB}$, ein aktueller Buchsenstrom $i_{B,ist}$ (als Schweißstrom) oder eine Schweißdrahtvorschubgeschwindigkeit $v_D$.

Die Stellgröße S wird vom Leistungsteil 2 in einen bestimmten elektrischen Buchsenstrom $i_B$ oder eine Buchsenspannung $u_B$ umgesetzt. Dazu kann die Schweißregelungseinheit 11 einen Stromregler umfassen, der die Stellgröße S gemäß eines vorgegebenen Reglergesetzes (z.B. ein PI-Regler oder PID-Regler) aus einer Differenz eines Ist-Buchsenstromes $i_{B,ist}$ und eines vorgegebenen Soll-Buchsenstromes $i_{B,soll}$ ermittelt. Die Stellgröße S könnte aber auch ein Soll-Buchsenstrom $i_{B,soll}$ oder eine Soll-Buchsenspannung $u_{B,soll}$ sein. In diesem Fall wäre ein solcher Stromregler im Leistungsteil 2 implementiert. Die Art der Stellgröße S hängt natürlich von der Implementierung des Leistungsteils 2 ab.

Die Schweißregelungseinheit 11 kann auch zusätzliche oder andere Komponenten der Schweißstromquelle 1 zur Regelung des Schweißprozesses steuern und überwachen, wie beispielsweise eine Schweißdrahtvorschubeinheit 17 (in Fig.1 strichliert angedeutet) zum Zuführen eines Schweißdrahtes 18, auch als Schweißelektrode 9, zur Schweißstelle mit einer gewünschten oder benötigten Schweißdrahtvorschubgeschwindigkeit $v_D$ (auch als zeitlicher Verlauf), wie in Fig.1 angedeutet. Dazu kann die Schweißregelungseinheit 11 zur Regelung des Schweißprozesses auch zusätzliche oder andere Stellgrößen S ermitteln.

Benötigte Istgrößen der Regelung, wie beispielsweise ein Schweißstrom oder Buchsenstrom $i_B$, eine Buchsenspannung $u_B$ oder eine Schweißdrahtvorschubgeschwindigkeit $v_D$, können mittels geeigneter Messsensoren gemessen werden oder können auch vorgegeben werden, beispielsweise aufgrund eines auszuführenden Schweißprogramms. Die Lichtbogenspannung $u_{LB}$ kann jedoch mit einer herkömmlichen Schweißstromquelle 1 und einem herkömmlichen Schweißbrenner 8 nicht direkt gemessen werden, sondern wird zur Rekonstruktion anhand eines Schweißleitungsmodells 13 geschätzt, das in einer Schätzeinheit 16 implementiert ist. Der Schätzwert der Lichtbogenspannung $u_{LB}$ wird mit "^" gekennzeichnet, also $\hat{u}_{LB}$.

Alle oder gewisse "Regelungseinheiten" oder "Einheiten" können als mikroprozessorbasierte Hardware ausgeführt sein, wobei die Funktionen dieser Regelungseinheiten oder Einheiten als Software implementiert sind. Dabei kann auch eine gemeinsame mikroprozessorbasierte Hardware für mehrere Funktionen verwendet werden. Eine Regelungseinheit oder Einheit kann aber auch auf Hardware in Form eines Field Programmable Gate Array (FPGA), Programmable Logic Device (PLD) oder einer anwendungsspezifischen integrierten Schaltung (ASIC) oder anderer integrierter Schaltkreis ausgeführt sein. Auch hierbei können mehrere Regelungseinheiten und/oder Einheiten auf einer solchen Hardware integriert sein. Eine Regelungseinheit oder Einheit kann aber auch als analoger Schaltkreis oder analoger Computer implementiert sein. Natürlich sind auch beliebige Mischungen dieser Ausführungen möglich.

Das Schweißleitungsmodell 13 ermittelt im Wesentlichen den Leitungsspannungsabfall us über die Schweißleitung 4, beispielsweise die Schweißstromleitung 5 und die Masseleitung 6, und daraus den Schätzwert der Lichtbogenspannung $\hat{u}_{LB}$. Der Leitungsspannungsabfall us ist dabei die Summe aller Spannungsabfälle an der Schweißleitung 4 von einer Messstelle 19 in der Schweißleitung 4 bis zum Lichtbogen 10 und wieder zurück. Darin umfasst sind auch die entsprechenden stromführenden Teile des Schweißbrenners 8 bis zum Lichtbogen 10 und das Werkstück 7 vom Lichtbogen 10 bis zur Masseleitung 6. An der Messstelle 19 wird eine Messspannung $u_M$ zwischen der Schweißstromleitung 5 und der Masseleitung 6 gemessen.

Die Messstelle 19 kann grundsätzlich an einer beliebigen Stelle zwischen den Anschlussbuchsen A+, A- der Schweißstromquelle 1 und dem Schweißbrenner 8 vorgesehen sein. Beispielsweise können die Anschlussbuchsen A+, A- als Messstelle 19 herangezogen werden, wie in Fig.1. Die Messstelle 19 kann aber an einer beliebigen Stelle in der Schweißleitung 4 oder an einer Anschlussstelle des Schlauchpakets vorgesehen sein, wie in Fig.1 strichliert angedeutet. Es ist auch möglich mehrere Messstellen 19 vorzusehen. An der Messstelle 19 wird eine Messspannung $u_M$ zwischen der Schweißstromleitung 5 und der Masseleitung 4 gemessen. In Fig.1 wird als Messspannung $u_M$ die Buchsenspannung $u_B$ gemessen. Die Lichtbogenspannung $\hat{u}_{LB}$ kann dann zu jedem Zeitpunkt aus der Messspannung $u_M$ und dem mit dem Schweißleitungsmodell 13 ermittelten Leitungsspannungsabfall $u_S$ ermittelt werden, beispielsweise als Differenz der Messspannung $u_M$ und dem Leitungsspannungsabfall $u_S$. Dabei kann in bekannter Weise auch ein bekannter Spannungsabfall über die Länge der freien Drahtelektrode berücksichtigt werden. Der Leitungsspannungsabfall $u_S$ muss dabei nicht eigens als Zwischenschritt ermittelt werden, sondern es kann auch direkt der Schätzwert der Lichtbogenspannung $\hat{u}_{LB}$ ermittelt werden. Mit dem Schweißleitungsmodell 13 soll der Leitungsspannungsabfall $u_S$ über die Schweißleitung 4 zwischen der Messstelle 19 und dem Lichtbogen 10 nachgebildet werden.

Das Schweißleitungsmodell 13 kann dazu den Schweißstrom $i_S$, der beispielsweise dem gemessen Ist-Buchsenstrom $i_{B,ist}$, entspricht, und/oder die Messspannung $u_M$, beispielsweise die Ist-Buchsenspannung $u_{B,ist}$, als Eingangsgrößen erhalten, die mit Messsensoren gemessen und als, analoge oder digitalisierte, Messwerte zur Verfügung gestellt werden können, beispielsweise zeitkontinuierlich oder zeitdiskret.

Auch das Schweißleitungsmodell 13 kann als Software auf einer mikroprozessorbasierten Hardware, die auch mit einer Regelungseinheit geteilt werden kann, implementiert sein oder auch ganz oder teilweise als Hardware in Form eines FPGA, PLD, ASIC oder analogen Schaltkreises.

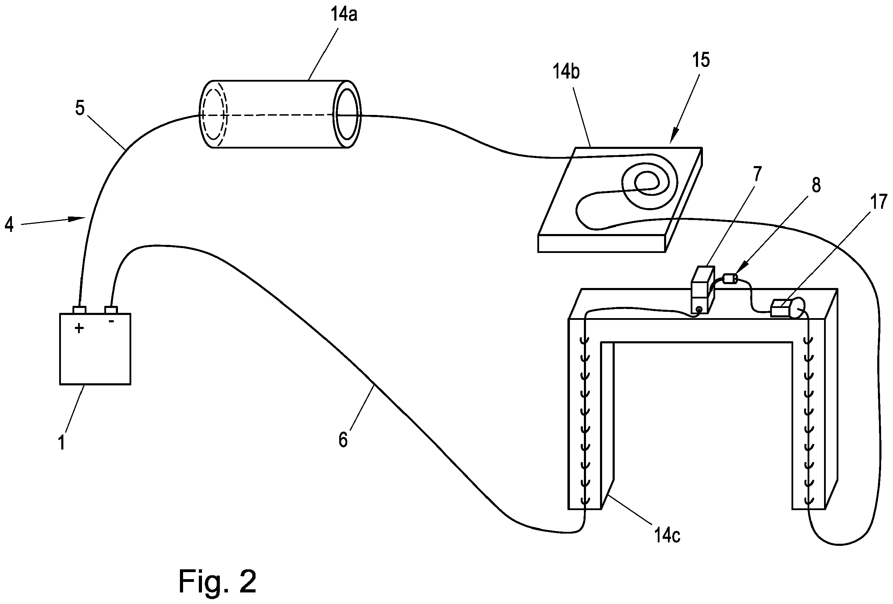

Die Schweißleitung 4, die Masseleitung 6 und/oder die Schweißstromleitung 5, kann in der Nähe eines para- oder ferromagnetischen und elektrisch leitfähigen, in Kürze im Folgenden nur mehr leitfähigen, Bauteils 14 angeordnet sein, wie in Fig.2 dargestellt. In Fig.2 ist die Schweißstromleitung 5 beispielsweise durch einen leitfähigen Bauteil 14a (beispielsweise ein leitfähiges Profil oder ein Roboterarm) geführt, auf einem leitfähigen Bauteil 14b (auch das zu schweißende Werkstück 7 denkbar) verlegt (auch in Form einer Schleife 15), oder auf einem Stahlbetonbauteil 14c verlegt. In der Praxis müssen natürlich nicht alle in Fig.2 beispielhaft dargestellten Verlegungen auftreten und es können auch noch andere Verlegungen im Bereich eines leitfähigen Bauteils 14 vorkommen. Schleifen 15 können beispielsweise auch um leitfähige Bauteile 14 herum ausgebildet sein und Spulen ausbilden. Zwischen einem leitfähigen Bauteil 14 und der Schweißleitung 4 kann es zu einer elektromagnetischen Wechselwirkung kommen.

Mit dem Schweißleitungsmodell 13 soll erfindungsgemäß nicht nur der durch die Schweißleitung 4 selbst verursachte Leitungsspannungsabfall $u_S$ modelliert, wie bisher durch das einfache R/L-Leitungsmodell, sondern auch der Einfluss der Umgebung der Schweißleitung 4 und auch der Einfluss der Verlegung der Schweißleitung 4. Um das zu erreichen, wurde erkannt, dass ein Schweißleitungsmodell 13 mit einer Ordnung größer gleich zwei benötigt wird.

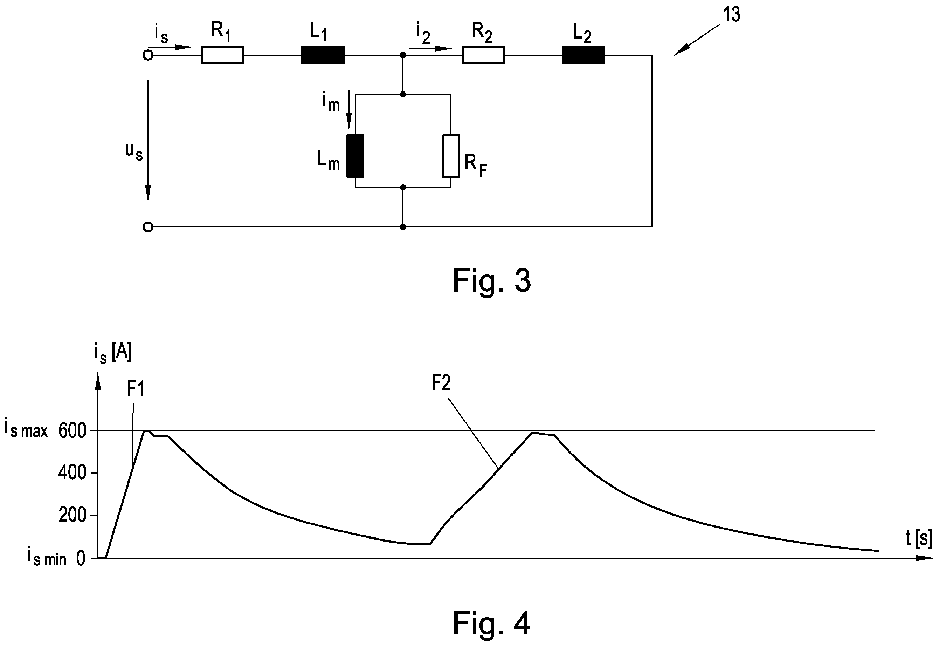

Das Schweißleitungsmodell 13 besteht aus miteinander verschalteten elektrischen Bauteilen, wie Widerständen, Induktivitäten und Kapazitäten, wobei mehrere Energiespeicher, wie Induktivitäten und/oder Kapazitäten, enthalten sind. In Fig.3 ist ein vorteilhaftes Schweißleitungsmodell 13 dargestellt. Am Eingang der Schaltung des Schweißleitungsmodells 13 liegt der durch die Schweißleitung 4 verursachte Leitungsspannungsabfall $u_S$ an und es fließt der Schweißstrom $i_S$ in das Leitungsmodell. Der Zusammenhang zwischen Leitungsspannungsabfall $u_S$ und Schweißstrom $i_S$ kann durch eine Übertragungsfunktion G als Quotient aus Ausgangsgröße und Eingangsgröße beschrieben werden, wobei der Leitungsspannungsabfall $u_S$ die Ausgangsgröße y darstellt und der Schweißstrom $i_S$ die Eingangsgröße u. Das Schweißleitungsmodell 13 könnte aber auch so ausgeführt sein, dass als Eingangsgröße die Messspannung $u_M$ dient und als Ausgangsgröße wieder der Leitungsspannungsabfall $u_S$. Die Ordnung der Übertragungsfunktion G, also die höchste vorkommende zeitliche Ableitung in der zugrundeliegenden Differentialgleichung, oder äquivalent die Ordnung der zugrundeliegenden Differenzengleichung, bestimmt die Ordnung des Schweißleitungsmodells 13. Erfindungsgemäß wird ein Schweißleitungsmodell 13 verwendet, das den Zusammenhang zwischen Leitungsspannungsabfall $u_S$ und Schweißstrom $i_S$ oder Messspannung $u_M$ durch ein Übertragungssystem mit Ordnung größer gleich zwei beschreibt, was gleichzusetzen ist mit einer Übertragungsfunktion G mit Ordnung größer gleich zwei. Die Struktur des Schweißleitungsmodells 13, also wie die elektrischen Bauteile miteinander verschaltet sind, spielt dabei nur eine untergeordnete Rolle. Durch die höhere Ordnung als beim herkömmlichen R/L-Leitungsmodell (mit Ordnung Eins) können die Einflüsse der Umgebung hinreichend abgebildet werden.

Ein physikalisches System wie das Schweißleitungsmodell 13 kann durch Differentialgleichungen im zeitkontinuierlichen Bereich, oder äquivalent auch Differenzengleichungen im zeitdiskreten Bereich, beschrieben werden, auch als System von gekoppelten Differentialgleichungen oder Differenzengleichungen. Aus der Systemtheorie ist es bekannt, dass ein System von gekoppelten Differentialgleichungen oder Differenzengleichungen 1.Ordnung in eine Differenzialgleichung oder Differenzengleichung höherer Ordnung umgewandelt werden kann und umgekehrt. Beispielsweise kann ein System von n gekoppelten Differentialgleichungen 1.Ordnung in eine Differentialgleichung n-ter Ordnung umgewandelt werden, und umgekehrt. Gleiches gilt für Differenzengleichungen. Damit kann ein Schweißleitungsmodell 13 mit einer Ordnung größer gleich zwei mathematisch auf verschiedene gleichwertige Weisen beschrieben werden.

Mit Bezugnahme auf Fig.3 wird ein Schweißleitungsmodell 13 und die mathematische Beschreibung beispielhaft erläutert. Mit einer eingangsseitigen Serienschaltung aus einem ohmschen Widerstand $R_1$ und einer Leitungsinduktivität $L_1$ wird die Schweißleitung 4 modelliert (so wie bisher durch das R/L-Leitungsmodell mit Ordnung eins). Zusätzlich wird die Kopplung mit einem leitfähigen Bauteil 14 in der Umgebung der Schweißleitung 4 durch eine Koppelinduktivität $L_m$ beschrieben. Es kann im Modell parallel zur Koppelinduktivität $L_m$ auch ein Widerstand $R_F$ vorgesehen sein, der Eisen- und Wirbelstromverluste beschreibt. Um einen möglichen elektrischen Stromfluss $i_2$ im leitfähigen Bauteil 14 abzubilden, kann noch ein weiterer Zweig mit einer Serienschaltung aus einem ohmschen Widerstand $R_2$ und einer Induktivität $L_2$ vorgesehen sein. Man erkennt, dass dieses Schweißleitungsmodell 13 auf dem bekannten Transformator Ersatzschaltbild mit kurzgeschlossener Sekundärseite basiert.

Es wäre auch möglich leitfähige Bauteile 14 nichtlinear zu modellieren, beispielsweise die Leitungsinduktivität $L_1$, um eine mögliche magnetische Sättigung im leitfähigen Bauteil 14 abzubilden. Damit kann beispielsweise die Leitungsinduktivität $L_1$ eine Funktion des Buchsenstromes $i_B$ sein, also $L_1(i_B)$. In diesem Fall kann nicht lineare Systemtheorie angewendet werden, um das Schweißleitungsmodell 13 mathematisch zu beschreiben.

Es sei nochmals darauf hingewiesen, dass die Struktur des Schweißleitungsmodells 13 nicht entscheidend ist und es demgemäß auch anders als in Fig.3 dargestellt sein kann, solange das Schweißleitungsmodell 13 durch ein Übertragungssystem n-ter Ordnung mit n > 1 beschrieben wird.

Das Schweißleitungsmodell 13 nach Fig.3 kann mit Anwendung der Kirchhoff'schen Regeln durch ein Übertragungssystem mit einem System von Differentialgleichungen 1.Ordnung wie folgt beschrieben werden,

$$\frac{d}{dt}x(t) = \underbrace{\begin{bmatrix} \dfrac{-R_1 - R_F}{L_1} & \dfrac{R_F}{L_1} & -\dfrac{R_F}{L_1} \\[2ex] \dfrac{R_F}{L_m} & -\dfrac{R_F}{L_m} & \dfrac{R_F}{L_m} \\[2ex] -\dfrac{R_F}{L_2} & \dfrac{R_F}{L_2} & \dfrac{-R_2 - R_F}{L_2} \end{bmatrix}}_{A} x(t) + \underbrace{\begin{bmatrix} \dfrac{1}{L_1} \\[2ex] 0 \\[1ex] 0 \end{bmatrix}}_{b} u_S(t)$$

$$y(t) = i_S(t)$$

mit dem Zustandsvektor $x(t) = [i_S(t)\ i_m(t)\ i_2(t)]^T$ und den Modellparametern $p_M = [R_1, R_2, R_F, L_1, L_2, L_m]$. Nach den bekannten Regeln der linearen Systemtheorie folgt daraus die Übertragungsfunktion G(s) als Quotient aus Ausgangsgröße y (hier $i_S$) und Eingangsgröße u (hier $u_S$) zu $G(s) = [1\ 0\ 0](sI - A)^{-1}b$, mit der Einheitsmatrix I und dem Laplace-Operator s. Auf das Schweißleitungsmodell 13 nach Fig.3 mit dem oben beschriebenen Übertragungssystem angewen-

$$G(s) = \frac{i_S}{u_S} = \frac{b_0 + b_1 s + b_2 s^2}{a_0 + a_1 s + a_2 s^2 + a_3 s^3},$$

det ergibt sich die Übertragungsfunktion also ein Übertragungssystem 3.Ordnung (n=3). Es wird damit die Ausgangsgröße y in Form des Schweißstromes $i_S$ in Abhängigkeit von der Eingangsgröße in Form des Leitungsspannungsabfalls $u_S$ dargestellt. Ebenso kann das Übertragungssystem anstelle des Schweißstromes $i_S$ auch mit der Messspannung $u_M$ als Eingangsgröße u angeschrieben werden. Das Übertragungssystem (System der Differentialgleichungen) kann natürlich auch mit dem Schweißstrom $i_S$ ein Eingangsgröße und dem Leitungsspannungsabfall us als Ausgangsgröße angeschrieben werden, womit sich die Übertragungsfunktion

$$G(s) = \frac{u_S}{i_S}$$

ergeben würde. In der Übertragungsfunktion G ist die Ordnung durch die höchste Potenz des Laplace-Operators s bestimmt. Die Koeffizienten ergeben sich daraus für das Schweißleitungsmodell 13 nach Fig.3 beispielsweise zu $b_0 = R_2 R_F$, $b_1 = (L_m R_2 + (L_2 + L_m) R_1)$, $b_2 = L_2 L_m$, $a_0 = R_1 R_2 R_F$, $a_1 = (L_m R_1 R_2 + (L_2 + L_m) R_1 + (L_1 + L_m) R_2) R_F$, $a_2 = L_2 L_m R_1 + L_2 (L_1 + L_m) R_F + L_1 L_m (R_2 + R_F)$, $a_3 = L_1 L_2 L_m$.

Die Koeffizienten $b_0$, $b_1$, $b_2$, $a_0$, $a_1$, $a_2$, $a_3$ der Übertragungsfunktion G(s) und die zugrundeliegenden Modellparameter $p_M$, hier beispielsweise $R_1$, $R_2$, $R_F$, $L_1$, $L_2$, $L_m$, sind entweder bekannt oder müssen ermittelt werden, um das Schweißleitungsmodell 13 in einer Schweißstromquelle 1 verwenden zu können. Falls die Modellparameter $p_M$ nicht bekannt sind, können diese mit hinlänglich bekannten Parameterschätzverfahren ermittelt werden. Dabei können die Koeffizienten $b_0$, $b_1$, $b_2$, $a_0$, $a_1$, $a_2$, $a_3$ der Übertragungsfunktion G und damit indirekt die Modellparameter $p_M$ ermittelt werden oder direkt die Modellparameter $p_M$ ermittelt werden.

Obwohl aus der Übertragungsfunktion G(s) bei bekannten Koeffizienten $b_0$, $b_1$, $b_2$, $a_0$, $a_1$, $a_2$, $a_3$ aus den bekannten Größen, hier z.B. der Schweißstrom $i_S$ oder die Messspannung $u_M$, der gesuchte Leitungsspannungsabfall $u_S$ im kontinuierlichen Zeitbereich ermittelt werden könnte, ist das in der Praxis aufwendig. Dazu müsste eine Differentialgleichung gelöst werden, was auf analytischem Wege oftmals nicht möglich ist, sondern numerisch durchgeführt werden muss. Aufgrund des damit verbundenen Rechenaufwands lässt sich das oftmals nicht in hinreichend kurzer Zeit online durchführen. Es ist daher vorteilhaft, die zeitkontinuierlichen Signale mit einer Abtastzeit T abzutasten und ein Abtastsystem mit einer gleichwertigen Differenzengleichung (anstelle einer Differentialgleichung) aufzustellen, das aus vergangenen Werten der Eingangs- und Ausgangsgröße den aktuellen Wert der Ausgangsgröße berechnet. Ein solches Abtastsystem eignet sich erheblich besser für eine praktische Implementierung in einer Schweißstromquelle 1.

Gemäß der Systemtheorie kann ein Abtastsystem durch Abtastung $t = k \cdot T_a$ mit einer Abtastzeit $T_a$ erstellt werden, wobei k den jeweiligen Abtastzeitpunkt beschreibt. Aus den kontinuierlichen Zeitfunktionen des Schweißstromes $i_S(t)$ und des Leitungsspannungsabfalls $u_S(t)$ werden damit diskrete Zeitfunktionen $i_S(k)$ oder in anderer Schreibweise $i_{S,k}$ und des Leitungsspannungsabfalls $u_S(k)$ oder in anderer Schreibweise $u_{S,k}$, wobei k hier kurz für $k \cdot T_a$ steht. Durch Anwendung der bekannten z-Transformation kann auch eine zeitdiskrete Übertragungsfunktion $G_z(z)$ als Quotient aus Ausgangsgröße und Eingangsgröße ermittelt werden. Die Ordnung n der zeitdiskreten Übertragungsfunktion $G_z(z)$ ist analog zum zeitkontinuierlichen Fall wieder größer als eins. Die Eingangsgröße $u_k$, z.B. der Schweißstrom $i_{S,k}$ oder die Messspannung $u_{M,k}$, und die Ausgangsgröße $y_k$, z.B. der Leitungsspannungsabfall $u_{S,k}$, sind dabei wieder als Polynome mit dem z-Operator und Koeffizienten $a_i$, $b_i$ enthalten. In der Übertragungsfunktion $G_z(z)$ ist die Ordnung n durch die höchste Potenz des z-Operators bestimmt. Mit den Regeln der z-Transformation kann damit eine Differenzengleichung erstellt werden, die den Leitungsspannungsabfall $u_{S,k}$ zum aktuellen Zeitpunkt k (kurz geschrieben für $k \cdot T_a$ mit der Abtastzeit $T_a$) aus Werten des Schweißstromes $i_{S,k}$ (oder der Messspannung $u_{M,k}$) zum aktuellen Abtastzeitpunkt k und Werten des Schweißstromes $i_{S,k-j}$ (oder der Messspannung $u_{M,k-j}$) zu vergangenen Zeitpunkten $(k-j) \cdot T_a$, sowie Werten des Leitungsspannungsabfalls $u_{S,k-j}$ aus vergangenen Zeitpunkten $(k-j) \cdot T_a$ ermittelt.

Am Beispiel des Schweißleitungsmodells 13 nach Fig.3 erhält man beispielsweise in allgemeiner Form eine

$$G_z(z) = \frac{u_S(z)}{i_S(z)} = \frac{b_3 + b_2 z + b_1 z^2 + b_0 z^3}{a_3 + a_2 z + a_1 z^2 + a_0 z^3}$$

Übertragungsfunktion mit Ordnung n >1 (n=3). Aus dieser Übertragungsfunktion $G_z(z)$ kann mit den Regeln der z-Transformation eine Differenzengleichung für den Leitungsspannungsabfall $u_{S,k}$ zum aktuellen Zeitpunkt k abgeleitet werden, in der allgemeinen Form

$$u_{S,k} = \frac{1}{a_0}\left[ b_0 i_{S,k} + b_1 i_{S,k-1} + b_2 i_{S,k-2} + b_3 i_{S,k-3} - a_1 u_{S,k-1} - a_2 u_{S,k-2} - a_3 u_{S,k-3} \right].$$

Je nach Schweißleitungsmodell 13 können gewisse Terme wegfallen oder andere oder zusätzliche Terme in der Differenzengleichung enthalten sein.

Die Koeffizienten $b_0$, $b_1$, $b_2$, $a_0$, $a_1$, $a_2$, $a_3$ der zeitdiskreten Übertragungsfunktion $G_z(z)$, die natürlich andere Werte haben als in der zeitkontinuierlichen Übertragungsfunktion $G(s)$, sind dabei entweder bekannt oder sind zu bestimmten, beispielsweise mit hinlänglich bekannten Parameterschätzverfahren. Aber auch diese Koeffizienten $b_0$, $b_1$, $b_2$, $a_0$, $a_1$, $a_2$, $a_3$ stehen im Zusammenhang mit den Modellparametern $p_M$ des Schweißleitungsmodells 13, sodass aus den Koeffizienten die Modellparameter $p_M$ ermittelt werden können.

Die Differenzengleichung eignet sich für eine online Ermittlung des Leitungsspannungsabfalls $u_{S,k}$ zum aktuellen Zeitpunkt k. Dazu müssen lediglich die vergangenen Werte der Ausgangsgröße $y_{k-j}$, beispielsweise des Leitungsspan-nungsabfalls $u_{S,k-j}$, und der Eingangsgröße $u_{k-j}$, beispielsweise des Schweißstromes $i_{S,k-j}$ (oder der Messspannung $u_{M,k-j}$), zu den benötigten Zeitpunkten (k-j) gespeichert werden und der aktuelle Wert der Eingangsgröße $u_k$, beispiels-weise des Schweißstromes $i_{S,k}$ (oder der Messspannung $u_{M,k}$), ermittelt werden, beispielsweise durch Messen und Abtasten der jeweiligen Größe.

Wie bereits oben erwähnt, können die Koeffizienten $b_0$, $b_1$, $b_2$, $a_0$, $a_1$, $a_2$, $a_3$ der Übertragungsfunktion $G(s)$ oder $G_z(z)$, aus denen dann wiederum die Modellparameter $p_M$ des Schweißleitungsmodells 13 ermittelt werden können, oder die Modellparameter $p_M$ direkt ermittelt werden. Die Modellparameter $p_M$ sind damit beispielsweise $R_1$, $R_2$, $R_F$, $L_1$, $L_2$, $L_m$ im Schweißleitungsmodell 13 nach Fig.3 oder indirekt die Koeffizienten $b_0$, $b_1$, $b_2$, $a_0$, $a_1$, $a_2$, $a_3$ in der Übertra-gungsfunktion $G(s)$ oder $G_z(z)$.

Für die Identifikation der Modellparameter $p_M$ können hinlänglich bekannte Parameterschätzverfahren zur Anwendung kommen, die für Modelle mit einer finiten Anzahl von Modellparametern $p_M$, wie eben in den Übertragungsfunktionen $G(s)$ und $G_z(z)$ oder der mathematischen Beschreibung des Schweißleitungsmodells 13 nach Fig.3, geeignet sind. Allgemein gesprochen werden mit einem Parameterschätzverfahren die Modellparameter $p_M$ indirekt oder direkt so bestimmt, dass das Schweißleitungsmodell 13 im Sinne eines festgelegten Gütekriteriums bestmöglich mit der zu identifizierenden Strecke, hier die Schweißleitung 4, übereinstimmt. Hierfür existieren eine Fülle von bekannten Parameterschätzverfahren, wobei häufig die Methode der kleinstes Fehlerquadrate (Least Squares) oder die Optimierung einer Kostenfunktion angewendet werden. Beide Verfahren sind grundlegend bekannt, weshalb im Folgenden nur kurz darauf eingegangen wird.

Die Parameterschätzverfahren beruhen darauf, dass N reale Messungen der Ausgangsgröße y, hier der Leitungsspannungsabfall $u_S$, als Funktion der Eingangsgrößen u, hier der Schweißstrom $i_S$, vorhanden sind. Bei der Messung wird vorzugsweise davon ausgegangen, dass die Schweißelektrode 9 kurzgeschlossen ist, dass also die Lichtbogenspannung $u_{LB} = 0V$ ist. Bei kurzgeschlossener Schweißelektrode 9 entspricht der Leitungsspannungsabfall us der Messspannung $u_M$ an der Messstelle 9, also z.B. der Buchsenspannung $u_B$. Damit kann durch die Schweißstromquelle 1 ein vorgegebener Schweißstrom $i_S$ als Eingangsgröße u erzeugt werden und die sich ergebende Messspannung $u_M$, z.B. die Buchsenspannung $u_B$, als Ausgangsgröße y gemessen werden. Auf diese Weise können eine beliebige Anzahl i=1, ..., N von Messungen aus Eingangsgröße $u_i$ und zugehöriger Ausgangsgröße $y_i$ erzeugt werden.

Aufgrund dieser Messwerte ist offensichtlich, dass ein Schweißleitungsmodell 13 geschätzt wird, dass den Leitungsspannungsabfall $u_S$ zwischen der Messstelle 19, an der die Messspannung $u_M$ gemessen wird, und dem Lichtbogen 10 liefert.

Mit einem Parameterschätzverfahren soll die Abweichung zwischen den realen Messwerten der Ausgangsgröße y und der vom Schweißleitungsmodell 13 für die vorliegenden Eingangsgrößen u gelieferten Schätzung der Ausgangsgröße $\hat{y}$, die abhängig ist von den Modellparametern $p_M$, minimiert werden, um die optimalen Modellparameter zu bestimmen.

Bei der Methode der kleinsten Fehlerquadrate wird aus den Messwerten $u_i$, $y_i$ ein lineares Gleichungssystem aufgestellt, das dann gelöst wird, um die Modellparameter $p_M$ zu erhalten. Dazu werden die zu bestimmenden Parameter, entweder direkt die Modellparameter $p_M$ oder die Koeffizienten $b_0$, $b_1$, $b_2$, $a_0$, $a_1$, $a_2$, $a_3$ einer Übertragungsfunktion $G(s)$, $G_z(z)$, in einem Parametervektor c zusammengefasst. Im Falle einer Übertragungsfunktion

$$G_z(z) = \frac{u_S(z)}{i_S(z)} = \frac{\sum_{m=0}^{n} b_m z^m}{\sum_{m=0}^{n} a_m z^m}$$

mit Zähler- und Nennerpolynom würde sich beispielsweise der

Parametervektor $c^T = [a_{n-1} ... i. \, a_0 \, b_n \, b_{n-1} ... b_0]$ ergeben, wobei man üblicherweise $a_n=1$ setzt und n die Ordnung der Übertragungsfunktion ist, wobei gewisse Koffezienten natürlich auch den Wert Null haben können. Der Schätzwert der Ausgangsgröße $y_i$. der i-ten Messung wird dann als $\hat{y}_i = h_i^T \hat{c}_i$ angeschrieben, mit dem Datenvektor $h_i$, der die Messwerte enthält. Die Dimension des Datenvektors $h_i$ folgt aus der Dimension des Parametervektors $c_i$. Allgemein kann der Datenvektor angeschrieben werden als $h_i^T = [-y_{i-1} ... - y_{i-N} \, u_i ... u_{i-N}]$ und beinhaltet folglich N Messwerte der Ausgangsgröße $y_{i-N}$ und die zugehörigen Eingangsgrößen $u_{i-N}$, sowie eine neue Eingangsgröße $u_i$, für die die Schätzung der Ausgangsgröße gesucht ist. Der aktuelle Fehler $e_i$ ergibt sich aus der Abweichung zwischen der Schätzung und der Messung in der Form $e_i = y_i - \hat{y}_i$. Mit verfügbaren N Messungen erhält man dann ein überbestimmtes lineares Gleichungssystem der Form $\hat{y} = H^T\hat{c}$ mit der Datenmatrix $H = [h_0...h_N]$ und dem Fehlervektor $e = y - H^T\hat{c}$ mit $y = [y_0...y_N]$, $e = [e_0...e_N]$ und $\hat{c} = [\hat{c}_0...\hat{c}_N]$. Bei der Methode der kleinsten Fehlerquadrate wird die Quadratnorm des Fehlers e verwendet, also $\|e\|_2 = \sqrt{e^T e}$, dessen Quadrat minimiert wird, also $\min_{\hat{c}} \|e\|_2^2$. Dafür kann die Lösung analytisch angegeben werden in der Form $\hat{c} = (H^T H)^{-1} H^T y$, womit die Parameter im Parametervektor $\hat{c}$, die den Koeffizienten $b_0$, $b_1$, $b_2$, $a_0$, $a_1$, $a_2$, $a_3$ der Übertragungsfunktion $G_z(z)$ oder $G(s)$ entsprechen (richtigerweise Schätzungen der Koeffizienten), und damit die zugrundeliegenden Modellparameter $p_M$ (richtigerweise Schätzungen davon) ermittelt werden können.

Bei der Methode der Optimierung einer Kostenfunktion J wird eine Kostenfunktion als Funktion der Modellparameter $p_M$ (ein Vektor mit den einzelnen Parametern) aufgestellt, die dann minimiert wird. Mathematisch lässt sich das in der Form $\min_{p_M} J(p_M)$ anschreiben, wobei beispielsweise eine Nebenbedingung $p_M > 0$ berücksichtigt wird, wenn mit den Modellparametern $p_M$ direkt die Bauteilwerte des Schweißleitungsmodells 13 geschätzt werden. Die Kostenfunktion J kann dabei beliebig aufgestellt werden und kann auch mehrere Kostenterme umfassen, um verschiedene Optimierungsziele zu verfolgen, wobei die Kostenterme in der Kostenfunktion J auch unterschiedlich gewichtet sein können, beispielsweise mittels Gewichtungsfaktoren. Verschiedene Kostenterme werden in der Kostenfunktion J üblicherweise addiert. In einer oftmals angewendeten Implementierung wird als Kostenfunktion J die Summe der quadratischen Abweichungen zwischen den N realen Ausgangsgrößen $y_i$ die gemessen werden und sich aufgrund der Eingangsgrößen $u_i$ einstellen, und den mit dem Schweißleitungsmodell 13 zu den Eingangsgrößen $u_i$ geschätzten Werten $y_i$ angesetzt. Mathematisch lässt sich die Kostenfunktion J damit anschreiben als $J(p_M) = \sum_{i=1}^{N}(y_i - \hat{y}_i)^2$. Die Optimierung wird dann üblicherweise numerisch gelöst, beispielsweise durch ein bekanntes iteratives Verfahren, beispielsweise das Newton-Verfahren oder Gradientenverfahren, oder ein evolutionäres Verfahren. Bei der Optimierung werden die Modellparameter $p_M$ zum Start gewählt oder vorgegeben und danach nach den Regeln des Optimierungsverfahren iterativ verändert, sodass die Kostenfunktion J gegen ein Minimum strebt. Üblicherweise wird auch ein Abbruchkriterium definiert, sodass die Optimierung bei Erreichen des Abbruchkriteriums beendet wird. Die Modellparameter $p_M$ bei Erreichen der Abbruchkriteriums werden als optimale Modellparameter verwendet.

Beispielsweise wurden die Modellparameter $p_M$ des Schweißleitungsmodell 13 nach Fig.3 für eine bestimmte Verlegung einer Schweißleitung 4 mittels Optimierung der Kostenfunktion $J(p_M) = \sum_{i=1}^{N}(y_i - \hat{y}_i)^2$ durch die folgenden Bauteilwerte geschätzt $L_M = 28,841 \,\mu H$, $L_1 = 16,373 \,\mu H$, $L_2 = 67,27 \,\mu H$, $R_F = 56 \,m\Omega$, $R_1 = 2,3 \,m\Omega$, $R_2 = 60,9 \,m\Omega$.

Daneben gibt es aber auch noch eine Fülle weiterer Verfahren, die zur Parameterschätzung herangezogen werden können, auch solche die zusätzlich ein Messrauschen berücksichtigen können. Allgemein können Verfahren der Autoregression eingesetzt werden, die auf bekannten Modellstrukturen wie einer ARX oder ARMAX Struktur (im Wesentlichen ein System von Differenzengleichungen bestimmter Struktur) basieren, und die auch Messrauschen berücksichtigen können. Gelöst werden solche Modellstrukturen häufig mit einer Maximum-Likelihood-Schätzung oder mit einem Verfahren der kleinster Fehlerquadrate.

Entweder werden direkt die Werte der Bauteile im Schweißleitungsmodell 13 geschätzt, oder es werden die Koeffizienten $b_0$, $b_1$, $b_2$, $a_0$, $a_1$, $a_2$, $a_3$ der zeitkontinuierlichen Übertragungsfunktion $G(s)$ oder zeitdiskreten Übertragungsfunktion $G_z(z)$ geschätzt. Werden die Koeffizienten $b_0$, $b_1$, $b_2$, $a_0$, $a_1$, $a_2$, $a_3$ der zeitkontinuierlichen Übertragungsfunktion $G(s)$ oder der zeitdiskreten Übertragungsfunktion $G_z(z)$ geschätzt, können daraus direkt die Werte der Bauteile im Schweißleitungsmodell 13 berechnet werden, wie oben ausgeführt. Werden die Koeffizienten $b_0$, $b_1$, $b_2$, $a_0$, $a_1$, $a_2$, $a_3$ der zeitdiskreten Übertragungsfunktion $G_z(z)$ geschätzt, dann könnte die zeitdiskrete Übertragungsfunktion mit Hilfe der inversen z-Transformation zurück in den zeitkontinuierlichen Bereich transformiert werden, woraus sich wiederum die Werte der Bauteile im Schweißleitungsmodell 13 ermitteln lassen.

Für die Parameterschätzung werden eine Anzahl i=1,...,N von Messwerten der Eingangsgröße u (Schweißstrom $i_S$ oder Messspannung $u_M$) und Ausgangsgröße y (Leitungsspannungsabfall $u_S$) benötigt. Die Eingangsgröße u soll dabei so gewählt werden, sodass möglichst viel Information über das zu identifizierende System aus der Ausgangsgröße y abgeleitet werden kann. Beim Schweißen treten oftmals Stromverläufe des Schweißstroms $i_S$ mit steil ansteigenden Stromflanken auf, beispielsweise beim Impulslichtbogenschweißen oder Kurzlichtbogenschweißverfahren. Das Abklingverhalten des Schweißstromes $i_S$ kann nicht direkt beeinflusst werden, weil die durch den Strom eingebrachte Leistung nur durch die ohm'sche Verlustleistung entzogen werden kann, die sich durch die ohm'schen Verluste der Schweißleitung 4 einstellt und im Falle eines brennenden Lichtbogen auch durch die durch den Lichtbogen 10 erzeugte Verlustleistung.

Für die Parameterschätzung wird daher vorzugsweise ein zeitlicher Verlauf der Eingangsgröße u (Schweißstrom $i_S$ oder Messspannung $u_M$) erzeugt, der eine Mehrzahl von ansteigenden Flanken, beispielsweise Stromflanken mit einer Steigung $|\Delta i_S / \Delta t|$, aufweist, wobei die Steigungen der einzelnen ansteigenden Flanken verschieden sind. Ein solcher zeitlicher Verlauf der Eingangsgröße u in Form des Schweißstromes $i_S$ ist beispielhaft in Fig.4 dargestellt. Darin ist ersichtlich, dass die ansteigende Flanke F1 des ersten Anstiegs steiler ist, als die ansteigende Flanke F2 des zweiten Anstiegs. Zwischen den zeitlich aufeinanderfolgenden Flanken F1, F2 klingt die Eingangsgröße u, beispielsweise der Schweißstrom $i_S$, ab,

Für die Schätzung der Modellparameter $p_M$ des Schweißleitungsmodells 13 hat es sich als vorteilhaft herausgestellt, wenn die unterschiedlichen Steigungen der zumindest zwei Flanken F1, F2 im Bereich zwischen 100 A/ms und 10000 A/ms gewählt werden.

Vorzugsweise ist die Steigung $|\Delta i_S / \Delta t|$ einer ersten Flanke F1 zwischen 800 A/ms und 1000 A/ms, besonders vorzugsweise 900 A/ms, und die Steigung $|\Delta i_S / \Delta t|$ einer zweiten Flanke F2 zwischen 200 A/ms und 400 A/ms, besonders vorzugsweise 300 A/ms. Es wird der Betrag der Steigung angegeben, weil der Schweißstrom $i_S$ für die Parameteridentifikation sowohl positiv als auch negativ (DC), oder auch alternierend (AC) sein kann.

Der Wert der Eingangsgröße u, beispielsweise der Schweißstrom $i_S$, wird dabei zwischen einem minimalen Eingangswert $u_{min}$, beispielsweise einem minimalen Schweißstrom $i_{S,min}$, und einem maximalen Eingangswert $u_{max}$, beispielsweise einem maximalen Schweißstrom $i_{S,max}$, erzeugt, die beide konfiguriert werden können und die für verschiedene Anstiege auch unterschiedlich sein kann. Bei Verwendung des Schweißstromes $i_S$ als Eingangswert u wird als maximaler Schweißstrom $i_{S,max}$ vorzugsweise zwischen 90% bis 100% des von der Schweißstromquelle 1 lieferbaren Schweißstromes $i_S$ gewählt. Der minimale Schweißstrom $i_S$ wird vorzugsweise zwischen 0% und 40% des von der Schweißstromquelle 1 lieferbaren Schweißstromes $i_S$ gewählt.

Die Parameteridentifikation kann aber auch zweistufig erfolgen. Aus dem Schweißleitungsmodell 13 in Fig.3 erkennt man, dass bei Anlegen eines Pulses der Eingangsgröße u, beispielsweise der Schweißstromes $i_S$, die Spannungen oder Ströme an den Induktivitäten $L_1$, $L_2$, $L_m$ abklingen. Liegt der Puls lange genug an, bis diese Spannungen oder Ströme zur Gänze abgeklungen sind, wirkt $L_m$ wie ein Kurzschluss und es kann direkt der ohmsche Widerstand $R_1$ aus der Eingangsgröße u, beispielsweise des angelegten Schweißstromes $i_S$, und der Ausgangsgröße y, beispielsweise der gemessenen Messspannung $u_M$ an der Messstelle 9, beispielsweise die Buchsenspannung $u_B$, ermittelt werden, beispielsweise in der Form $R_1=u_M/i_S$. Damit kann das Parameterschätzverfahren zur Bestimmung der restlichen Modellparameter $p_M$ vereinfacht werden, weil der Widerstand $R_1$ bereits bekannt ist.

Der Puls wird dabei so lange aufgeschaltet, bis die Messspannung $u_M$ konstant ist, also bis die Spannungen an den Induktivitäten $L_1$, $L_2$, $L_m$ abgeklungen sind. Anhand der Messwerte der Messspannung $u_M$ lässt sich einfach festellen, wann die Messspannung $u_M$ konstant ist. Die Höhe des Pulses wird im Falle des Schweißstromes $i_S$ vorzugsweise zwischen 40% und 60% des von der Schweißstromquelle 1 lieferbaren Schweißstromes $i_S$ gewählt.

Es sei angemerkt, dass für die Parameteridentifikation die Reihenfolge in welcher die Flanken F1, F2 und gegebenenfalls der Puls für die Schätzung des Widerstandes $R_1$ unerheblich ist und beliebig gewählt werden kann.

Der zur Parameterschätzung gewählte zeitliche Verlauf (auch zeitdiskret) der Eingangsgröße u, beispielsweise der Schweißstrom $i_S$, wird beispielsweise der Schweißprozessregelungseinheit 12 als Sollgröße SG vorgegeben, Mit dieser vorgegebenen Eingangsgröße u werden die zugehörigen Ausgangsgrößen y, beispielsweise in Form des Leitungsspannungsabfalls us bei kurzgeschlossene Schweißelektrode 9 gemessen, bevorzugt zeitdiskret zu bestimmten Abtastzeitpunkten $T_a$, um die Anzahl i=1,... ,N von Messwerten zu erhalten. Die Wahl des zeitlichen Verlaufs der Eingangssgröße u beeinflusst die Qualität der Parameteridentifikation und wird daher vorteilhaferweise problemangepasst erfolgen.

Mit den bekannten Modellparametern $p_M$, beispielsweise nach der Identifikation der Modellparameter $p_M$ wie oben beschrieben, des Schweißleitungsmodells 13 kann dieses in der Schweißstromquelle 1 verwendet werden, um aus Messgrößen der Eingangsgröße u, beispielsweise des aktuellen Schweißstrom $i_{S,ist}$ (der dem gemessenen Buchsenstrom $i_{B,ist}$ entspricht) oder der aktuellen Messspannung $u_{M,ist}$ an der Messstelle 19 (beispielsweise die aktuelle Buchsenspannung $u_{B,ist}$), einen Schätzwert für die Lichtbogenspannung $\hat{u}_{LB}$ zu ermitteln. Dieser Schätzwert $\hat{u}_{LB}$ ergibt sich aus einem bekannten Zusammenhang zwischen der Messspannung $u_{M,ist}$, die gemessen wird, und dem aus dem Schweißleitungsmodell 13 erhaltenen Leitungsspannungsabfall us, optional unter Berücksichtigung eines bekannten Spannungsabfalls an der freien Drahtelektrode. Der Zusammenhang ist beispielsweise einfach die Differenz aus der Messspannung $u_{M,ist}$ und dem ermittelten Leitungsspannungsabfall $u_S$.

Die Ermittlung der Modellparameter $p_M$ des Schweißleitungsmodells 13 kann einmal vor Beginn der Schweißung erfolgen. Dazu wird die Schweißelektrode 9 über das Werkstück 7 kurzgeschlossen und der vorgegebene oder konfigurierte zeitliche Verlauf der Eingangsgröße u (Schweißstrom $i_S$) zur Identifikation der Modellparameter $p_M$ erzeugt. Dabei wird die Messspannung $u_M$ an der Messstelle 19 gemessen, die im Kurzschlussfall dem Leitungsspannungsabfall $u_S$ entspricht. Daraus können die Modellparameter $p_M$ wie oben erläutert ermittelt werden.

Es gibt Schweißprozesse, bei denen regelmäßig Kurzschlussphasen vorgesehen sind, beispielsweise der sogenannte CMT-Schweißprozess (cold metal transfer) oder Kurzlichtbogen-Schweißprozess. Dabei wird die abschmelzende Schweißelektrode in Richtung Werkstück 7 bewegt, bis sich bei Kontakt mit dem Schmelzbad ein Kurzschluss bildet. Danach wird die Schweißelektrode in die entgegengesetzte Richtung zurückbewegt. Bevor ein Kurzschluss eintritt, wird in der Lichtbogenphase ein Tropfen der Schweißelektrode angeschmolzen und in der darauffolgenden Kurzschlussphase wird dieser Tropfen in das Schmelzbad abgegeben. Lichtbogenphase und Kurzschlussphase wechseln sich zyklisch ab.

Solche Kurzschlussphasen können auch genutzt werden, um während des Schweißens laufend das Schweißleitungsmodell 13 zu aktualisieren, beispielsweise indem die Modellparameter $p_M$ während einer Kurzschlussphase wie oben beschrieben neu bestimmt werden.

Die wiederholte Neubestimmung der Modellparameter $p_M$ kann nützlich sein, um das Schweißleitungsmodell 13 laufend an die aktuellen Gegebenheiten beim Schweißen anzupassen, beispielsweise wenn der Schweißbrenner 8 von einem Schweißroboter geführt wird und die Schweißleitung 4, die Masseleitung 6 und/oder die Schweißstromleitung 5, zumindest teilweise am Schweißroboter angeordnet ist. Durch die Bewegung der Gelenke des Schweißroboters können sich wechselnde magnetische Wechselwirkungen zwischen der Schweißleitung 4 und dem Schweißroboter (leitfähiger Bauteil 14) ergeben, die auf diese Weise berücksichtigt werden können. Durch die Bewegung des Schweißroboters kann sich aber auch die Lage der Schweißleitung 4 relativ zu einem leitfähigen Bauteil 14 ändern, was ebenso zu einer wechselnden Wechselwirkung führen kann. Ähnliches kann sich natürlich auch beim manuellen Schweißen ergeben.

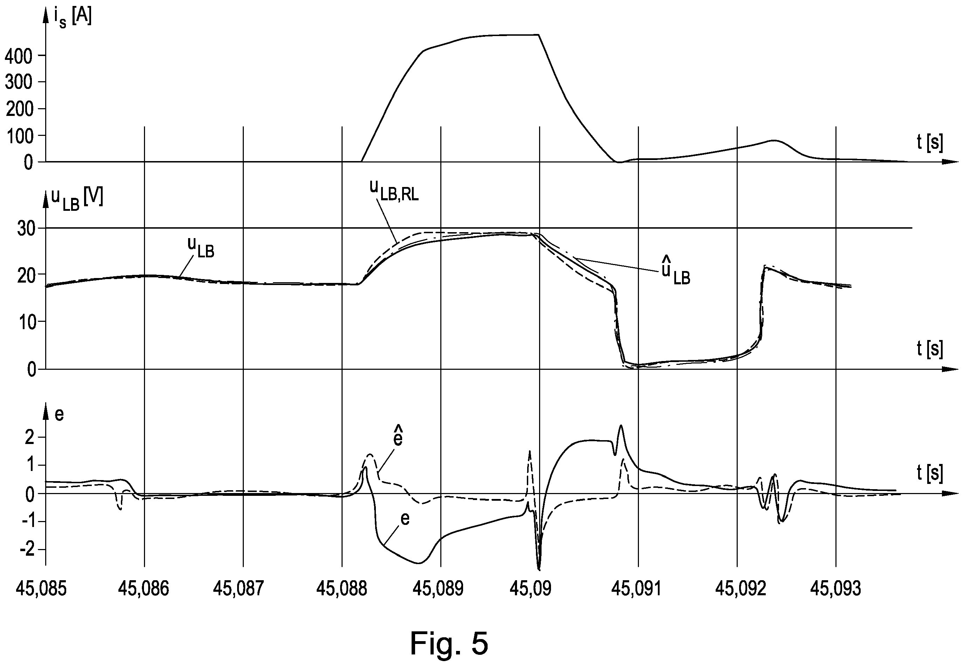

In Fig.5 ist ein beispielhafter zeitlicher Verlauf über die Zeit t einer zum Vergleich gemessenen Lichtbogenspannung $u_{LB}$ dargestellt, die sich bei einem Stromimpuls mit steiler ansteigender Stromflanke des Schweißstromes is (in Fig.5 oben) mit einem leitfähigen Bauteil 14 in der Nähe der Schweißleitung 4 ergibt. Strichliert ist die mit dem bisher üblichen einfachen R/L-Leitungsmodell geschätzte Lichtbogenspannung $u_{LB,RL}$ dargestellt. Mit strichpunktierter Linie ist die mit dem erfindungsgemäßen Schweißleitungsmodell 13 mit Ordnung n>1 (konkret 3.Ordnung wie oben zu Fig.3 beschrieben) ermittelte Lichtbogenspannung $\hat{u}_{LB}$ dargestellt, die der gemessene Lichtbogenspannung $u_{LB}$ mit weniger Abweichung folgt. Man erkennt die geringere Abweichung zwischen den beiden Verläufen. Zur Verdeutlichung wird in Fig.5 unten der jeweilige Fehler e zwischen der geschätzten Lichtbogenspannung, einmal $u_{LB,RL}$ mit dem R/L-Leitungsmodell und das andere Mal die erfindungsgemäß ermittelte Lichtbogenspannung $\hat{u}_{LB}$, und der gemessenen Lichtbogenspannung $u_{LB}$ dargestellt. Der Fehler ê, der sich mit der erfindungsgemäß ermittelten Lichtbogenspannung $\hat{u}_{LB}$ ergibt, ist kleiner als der Fehler e, der sich mit der mit dem bisherigen R/L-Leitungsmodell ermittelten Lichtbogenspannung $u_{LB,RL}$ ergibt.

Daraus ist ersichtlich, dass das bisherige R/L-Leitungsmodell, vor allem bei hochdynamischen Schweißprozessen (steile Stromflanken), schlechter geeignet ist, als das erfindungsgemäße Schweißleitungsmodell 13 mit Ordnung n>1. Es ist ersichtlich, dass die Lichtbogenspannung $u_{LB}$ mit einem solchen Schweißleitungsmodell 13 deutlich besser angenähert wird. Die Schätzung der Lichtbogenspannung $\hat{u}_{LB}$ könnte man unter Umständen mit einer nichtlinearen Modellierung der Induktiviät $L_1$ im Schweißleitungsmodell 13, beispielsweise als Funktion des Schweißstromes $i_S$, also $L_1(i_S)$, noch weiter eliminieren.

Wie erwähnt werden durch die Parameterschätzung die Werte der Modellparameter $p_M$ geschätzt. Wird das regelmäßig wiederholt und wird die zeitliche Entwicklung zumindest eines Modellparameters $p_M$ aufgezeichnet, dann kann aus der zeitlichen Entwicklung des Wertes dieses zumindest einen Modellparameters $p_M$ auch auf den Zustand der Schweißleitung geschlossen werden. Ändert sich der zumindest eine Modellparameter $p_M$ beispielsweise in aufeinander folgenden Schätzungen zu viel (entsprechende Grenzen können konfiguriert werden), dann kann auch auf einen Schaden in der Schweißleitung geschlossen werden und es könnte eine entsprechende Ausgabe an der Schweißstromquelle 1 erfolgen, beispielsweise ein visuelle Anzeige und/oder ein akustisches Warnsignal.

Die, oder zumindest ein Modellparameter $p_M$ kann auch dazu verwendet werden, um Rückschlüsse zur Verlegung der Schweißleitung 4 zu erhalten. Wenn ein Modellparameter $p_M$, der die Kopplung mit dem leitfähigen Bauteil 14, beispielsweise eine Koppelinduktivität $L_m$ wie im Schweißleitungsmodell 13 nach Fig.3, zu groß wird (was durch entsprechende Grenzen vorgegeben oder konfiguriert sein kann), dann könnte ein Hinweis ausgegeben werden, beispielsweise akustisch oder visuell, dass die Lage der Schweißleitung 4 geprüft werden sollte.

Es können, wie erwähnt, auch mehrere Messstellen 19 vorgesehen sein. Das ermöglicht es, für die verschiedenen Messstellen 19 jeweils ein Schweißleitungsmodell 13 zu ermitteln, indem zu Messwerten an den verschiedenen Messstellen 19 jeweils die Modellparameter $p_M$ geschätzt werden. Damit können zumindest zwei verschiedene Schätzungen der Lichtbogenspannung $\hat{u}_{LB}$ ermittelt werden. Damit kann z.B. eine Schätzung durch die andere plausibilisiert werden, indem die Schätzung als gültig angesehen wird, wenn die beiden Schätzungen nicht zu weit voneinander abweichen (wobei entsprechende Grenzen konfiguriert oder vorgegeben sein können). Es können aber auch zumindest zwei verschiedene Schätzungen der Lichtbogenspannung $\hat{u}_{LB}$ verwendet werden, um einen Mittelwert zu ermitteln, die dann als Schätzung der Lichtbogenspannung $\hat{u}_{LB}$ herangezogen wird. Die verschiedenen Schätzungen der Lichtbogenspannung $\hat{u}_{LB}$ könnten aber genutzt werden, um einen Fehler in der Schweißleitung 4 örtlich einzugrenzen. Liefern mehrere Schätzungen der Lichtbogenspannung $\hat{u}_{LB}$ ab einer bestimmten Messstelle 19 (also in Richtung des Schweißbrenners 9) im Wesentlichen gleiche Schätzungen der Lichtbogenspannung $\hat{u}_{LB}$, die sich aber von Schätzungen vor dieser bestimmten Messstelle 19 unterscheiden, dann kann das ein Hinweis auf einen Schaden in der Schweißleitung 4 vor dieser bestimmten Messstelle 19 sein.

Eine geschätzte Lichtbogenspannung $\hat{u}_{LB}$ kann zur Regelung eines mit der Schweißstromquelle 1 umgesetzten Schweißprozesses dienen, wie oben zu Fig.1 ausgeführt. Eine geschätzte Lichtbogenspannung $\hat{u}_{LB}$ kann aber auch verwendet werden, um andere für einen Schweißprozess wichtige Kennwerte zu ermitteln. Beispielsweise können mit der Lichtbogenspannung $\hat{u}_{LB}$, und gegebenenfalls weiteren Prozessgrößen wie dem Schweißstrom $i_S$, Kennwerte des Schweißprozesses ermittelt werden, beispielsweise der Wärmeeintrag in das zu schweißende Werkstück 7 und/oder die Streckenenergie (auch Lichtbogenenergie genannt). Die Streckenenergie ist beispielsweise ein Maß für die Energie, die dem Schweißprozeß zugeführt wird. Der Wärmeeintrag und/oder die Streckenenergie kann für eine Qualitätssicherung und für eine spätere Nachverfolgung von Fehlern zur Schweißung als Dokumentationswert dokumentiert werden. Andere Kennwerte des Schweißprozesses, die anhand der geschätzten Lichtbogenspannung $\hat{u}_{LB}$ ermittelt werden können und als Dokumentationswerte gespeichert werden können, sind ein Widerstandswert über die Schweißstelle oder ein Leistungswert. Ein Dokumentationswert kann an der Sschweißstromquelle oder anderen Stelle gespeichert werden oder auch in Echtzeit (oder Periodensynchron zum Schweißprozess) über ein Interface (analog oder digital) ausgegeben werden.

## Patentansprüche

1. Verfahren zur Bestimmung eines Schätzwertes einer Lichtbogenspannung ($\hat{u}_{LB}$) eines zwischen einer Schweißelektrode (9) und einem Werkstück (7) brennenden Lichtbogens (10), wobei mit einem Schweißleitungsmodell (13) mit Modellparametern ($p_M$) ein Leitungsspannungsabfall ($u_S$) einer Schweißleitung (4) zwischen einer Messstelle (19) an der Schweißleitung (4) und dem Lichtbogen (10) ermittelt wird und das Schweißleitungsmodell (13) die Schweißleitung (4) als Übertragungssystem mit einem über die Schweißleitung (4) fließenden Schweißstrom ($i_S$) oder einer an der Messstelle (19) anliegenden Messspannung ($u_M$) als Eingangsgröße u und dem Leitungsspannungsabfall ($u_S$) als Ausgangsgröße y modelliert, um zu einem aktuellen Schweißstrom ($i_S$) oder einer aktuellen Messspannung ($u_M$) einen aktuellen Schätzwert für den Leitungsspannungsabfall ($\hat{u}_{LB}$) zu ermitteln, und mit einem bekannten Zusammenhang zwischen Leitungsspannungsabfall ($u_S$) und Lichtbogenspannung ($u_{LB}$) der Schätzwert der Lichtbogenspannung ($\hat{u}_{LB}$) ermittelt wird, **dadurch gekennzeichnet, dass** die Schweißleitung (4) zur Schätzung der Lichtbogenspannung ($\hat{u}_{LB}$) mit dem Schweißleitungsmodell (13) als Übertragungssystem mit Ordnung größer eins modelliert wird.

2. Verfahren nach Anspruch 1, **dadurch gekennzeichnet, dass** der Schätzwert der Lichtbogenspannung ($\hat{u}_{LB}$) als Differenz zwischen der Messspannung ($u_M$) an der Messstelle (19) und dem ermittelten Leitungsspannungsabfall ($u_S$) ermittelt wird.

3. Verfahren nach Anspruch 1 oder 2, **dadurch gekennzeichnet, dass** das Übertragungssystem mit einer Übertragungsfunktion G(s), $G_z(z)$ als Quotient aus Ausgangsgröße y zu Eingangsgröße u modelliert wird.

4. Verfahren nach einem der Ansprüche 1 bis 3, **dadurch gekennzeichnet, dass** während eines Kurzschlusses zwischen der Schweißelektrode (9) und dem Werkstück (7) oder einem Schmelzbad am Werkstück (7) zu einer Vielzahl N Eingangsgrößen u die zugehörigen Ausgangsgrößen y gemessen werden und die Modellparameter ($p_M$) anhand der N Eingangsgrößen u und Ausgangsgrößen y mittels eines Parameterschätzverfahrens identifiziert werden.

5. Verfahren nach Anspruch 4, **dadurch gekennzeichnet, dass** die Modellparameter ($p_M$) während einer Kurzschlussphase während des Schweißens identifiziert werden.

6. Verfahren nach Anspruch 4, **dadurch gekennzeichnet, dass** die Modellparameter ($p_M$) für einen vorgegebenen zeitlichen Verlauf der Eingangsgröße u und zugehörigen Ausgangsgrößen y vor dem Schweißen identifiziert werden.

7. Verfahren nach einem der Ansprüche 4 bis 6, **dadurch gekennzeichnet, dass** ein zeitlicher Verlauf der Eingangsgröße u erzeugt wird, der eine Mehrzahl von ansteigenden Flanken (F1, F2) aufweist, wobei die Steigungen von zumindest zwei Flanken (F1, F2) verschieden sind.

8. Verfahren nach Anspruch 7, **dadurch gekennzeichnet, dass** die verschiedenen Steigungen der zumindest zwei Flanken (F1, F2) für den Schweißstrom ($i_S$) als Eingangsgröße im Bereich zwischen 100 A/ms und 10000 A/ms gewählt werden.

9. Verfahren nach einem der Ansprüche 4 bis 7, **dadurch gekennzeichnet, dass** mit dem Parameterschätzverfahren die Abweichung zwischen den Messwerten der Ausgangsgröße und der mit dem Schweißleitungsmodell zu den Eingangsgrößen ermittelten Schätzungen der Ausgangsgröße minimiert wird, um die Modellparameter des Schweißleitungsmodells zu bestimmen.

10. Verfahren nach einem der Ansprüche 4 bis 9, **dadurch gekennzeichnet, dass** die Modellparameter mehrmals identifiziert werden die die zeitliche Entwicklung des Wertes zumindest eines der Modellparameter untersucht wird, um Rückschlüsse auf Fehler in der Schweißleitung oder auf eine ungünstige Verlegung der Schweißleitung zu erhalten.

11. Verfahren nach einem der Ansprüche 1 bis 10, **dadurch gekennzeichnet, dass** ein Puls des Schweißstrom ($i_S$) solange an der Schweißleitung (4) angelegt wird bis der Wert der Messspannung ($u_M$) an der Messstelle (19) konstant ist und ein ohmscher Widerstand ($R_1$) des Schweißleitungsmodells (13) aus dem Quotienten der Messspannung ($u_M$) und des angelegten Schweißstromes ($i_S$) ermittelt wird.

12. Schweißstromquelle zur Durchführung eines Schweißprozesses mit einer Schweißregelungseinheit (12), wobei in einer Schätzeinheit (16) der Schweißregelungseinheit (12) ein Schweißleitungsmodell (13) mit Modellparametern ($p_M$) implementiert ist, das einen Zusammenhang eines über eine Schweißleitung (4) der Schweißstromquelle (1) fließenden Schweißstromes ($i_S$) oder einer an einer Messstelle (19) der Schweißleitung (4) anliegenden Messspannung ($u_M$) als Eingangsgröße u und eines Leitungsspannungsabfall ($u_S$) an der Schweißleitung (4) als Ausgangsgröße y in Form eines Übertragungssystems beschreibt, und das Schweißleitungsmodell (13) zu einem aktuellen Schweißstrom ($i_S$) oder einer aktuellen Messspannung ($u_M$) einen aktuellen Schätzwert für den Leitungsspannungs-abfall ($\hat{u}_{LB}$) ermittelt und die Schweißregelungseinheit (12) daraus aus einem bekannten Zusammenhang zwischen Leitungsspannungsabfall ($u_S$) und Lichtbogenspannung ($u_{LB}$) den Schätzwert der Lichtbogenspannung ($\hat{u}_{LB}$) ermit-telt, **dadurch gekennzeichnet, dass** das Schweißleitungsmodell (13) in der Schätzeinheit (16) als Übertragungssystem mit Ordnung größer eins modelliert ist.

Fig. 1

EP 4 005 726 A1

Fig. 2

Fig. 3

Fig. 4

EP 4 005 726 A1

Fig. 5

EP 4 005 726 A1

EP 4 005 726 A1

**Europäisches Patentamt**
**European Patent Office**
**Office européen des brevets**

# EUROPÄISCHER RECHERCHENBERICHT

**Nummer der Anmeldung**

EP 20 20 9769

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | WO 00/74888 A1 (FRONIUS SCHWEISSMASCH PROD [AT]; ARTELSMAIR JOSEF [AT] ET AL.) 14. Dezember 2000 (2000-12-14) * das ganze Dokument * | 1-12 | INV. B23K31/12 B23K9/095 |
| A,D | DE 10 2005 005771 B4 (LORCH SCHWEISSTECH GMBH [DE]) 19. März 2009 (2009-03-19) * das ganze Dokument * | 1-12 | |
| A | ZENG MIN ET AL: "Modeling for GMAW process with a current waveform control method", JOURNAL OF MATERIALS PROCESSING TECHNOLOGY, ELSEVIER, NL, Bd. 240, 22. Oktober 2016 (2016-10-22), Seiten 404-413, XP029809803, ISSN: 0924-0136, DOI: 10.1016/J.JMATPROTEC.2016.10.018 * 3.2 Arc load model * | 1-12 | |
| A | UWE REISGEN ET AL: "Virtual welding equipment for simulation of GMAW processes with integration of power source regulation", FRONTIERS OF MATERIALS SCIENCE ; SELECTED PUBLICATIONS FROM CHINESE UNIVERSITIES, SP HIGHER EDUCATION PRESS, HEIDELBERG, Bd. 5, Nr. 2, 5. Juni 2011 (2011-06-05), Seiten 79-89, XP019912266, ISSN: 2095-0268, DOI: 10.1007/S11706-011-0132-6 * 2 Description of the model * | 1-12 | RECHERCHIERTE SACHGEBIETE (IPC) B23K |

Der vorliegende Recherchenbericht wurde für alle Patentansprüche erstellt

| Recherchenort | Abschlußdatum der Recherche | Prüfer |
|---|---|---|
| München | 7. Mai 2021 | Hernanz, Sonsoles |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 20 9769

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-05-2021

| Im Recherchenbericht angeführtes Patentdokument | Datum der Veröffentlichung | Mitglied(er) der Patentfamilie | | Datum der Veröffentlichung |
|---|---|---|---|---|
| WO 0074888 A1 | 14-12-2000 | AT | 273101 T | 15-08-2004 |
| | | AT | 409833 B | 25-11-2002 |
| | | AU | 5371200 A | 28-12-2000 |
| | | DK | 1183125 T3 | 15-11-2004 |
| | | EP | 1183125 A1 | 06-03-2002 |
| | | ES | 2225155 T3 | 16-03-2005 |
| | | US | 6710297 B1 | 23-03-2004 |
| | | WO | 0074888 A1 | 14-12-2000 |
| DE 102005005771 B4 | 19-03-2009 | KEINE | | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 200074888 A1
- DE 102005005771 B4